# EUROPEAN PATENT SPECIFICATION

(11) **EP 2 723 524 B1**
(45) Date of publication and mention of the grant of the patent: **27.12.2017**
(21) Application number: 12756838.4
(22) Date of filing: 20.06.2012
(51) Int. Cl.: B22F 1/00, B22F 9/22, B82Y 10/00

(54) **METHOD FOR A SYNTHESIS OF QUASI ONE-DIMENSIONAL STRUCTURES OF 4D AND 5 D (NB, MO TA, W) TRANSITION METALS**
VERFAHREN ZUR SYNTHESE VON PRAKTISCH EINDIMENSIONALEN STRUKTUREN AUS 4D- UND 5D- (NB, MO TA, W)- ÜBERGANGSMETALLEN
PROCÉDÉ DE SYNTHÈSE DE STRUCTURES QUASI MONODIMENSIONNELLES DE MÉTAUX DE TRANSITION 4D ET 5D (NB, MO, TA, W)

(30) Priority: 24.06.2011 SI 201100223 P
(43) Date of publication of application: 30.04.2014
(73) Proprietor: Institut "Jozef Stefan", 1000 Ljubljana (SI); Center odlicnosti nanoznanosti in nanotehnologije - CO Nanocenter, 1000 Ljubljana (SI)
(72) Inventor: JESIH, Adolf, 6232 Planina (SI); KOVIC , Andrej, 1233 Dob pri Domzalah (SI); MRZEL, Ales, 1000 Ljubljana (SI)
(74) Representative: Grünecker Patent- und Rechtsanwälte PartG mbB
(86) International application number: PCT/SI2012/000041
(87) International publication number: WO 2012/177224

(56) References cited:
- WO-A2-2007/098111
- WO-A2-2008/121081
- VRBANIC D ET AL: "Synthesis and characterization of new Mo-chalcogenide based nanowires", AIP CONFERENCE PROCEEDINGS, AMERICAN INSTITUTE OF PHYSICS, NEW YORK, US, no. 685, 1 January 2003 (2003-01-01), pages 495-498, XP002379259, ISSN: 0094-243X, DOI: 10.1063/1.1628079
- VRBANIC D ET AL: "Mo6S3I6 nanowires", AIP CONFERENCE PROCEEDINGS, AMERICAN INSTITUTE OF PHYSICS, NEW YORK, US, no. 723, 1 January 2004 (2004-01-01), pages 423-426, XP002379261, ISSN: 0094-243X, DOI: 10.1063/1.1812121

## Description

The subject of the invention is a method for a synthesis of one-dimensional structures, such as nanowires, microwires and nanobelts of 4d and 5d transition metals selected from Nb, Mo, Ta and W. The invention belongs to the field of inorganic chemistry and chemistry of transition metals. The invention refers to a synthesis of quasi one-dimensional structures of transition metals by using a method of conversion of quasi one-dimensional compounds with a submicron cross-section of nanowires described with formula M₆C_{y}H_{z}, 8,2<y+z≤10, wherein M is a transition metal selected from Nb, Mo, Ta and W, C is a chalcogen selected from sulphur (S), selenium (Se) and tellurium (Te); H is halogen iodine (I) by heating in the presence of hydrogen. This method provides for a synthesis of quasi one-dimensional structures, such as nanowires, microwires and nanobelts of 4d and 5d transition metals selected from Nb, Mo, Ta and W.

4d and 5d transition metals (Nb, Mo, Ta, W) have a high technological utility value. Molybdenum, which is very resistant to high temperatures and only insignificantly softens and expands when heated, is used in applications accompanied by intense heating, such as in aircraft industry, electric contacts, industrial engines. It is widely used in steel alloys to improve corrosion resistance. Niobium as an additive to steel increases its hardness, forming capacity and welding possibility. Niobium-containing steels are used in automobile and gas industry. Niobium and several alloys thereof are physiologically inert and are used in numerous medical devices, such as pace makers. Niobium forms superconductive alloys used in the construction of devices for medical diagnostics, such as clinical magnetic resonance imaging. Tungsten is used for the manufacturing of hard materials based on tungsten carbide (drills, knives, circular saws, tools for treating metals ...). Due to its high density it forms heavy metal alloys used in military industry, rocket industry, aircraft industry. Having a high melting point, tungsten is used in bulbs, cathode and vacuum tubes, heaters and rocket engines. In electronics, tungsten is used as an intermesh connecting material in integrated circuit boards. The electronic structure of tungsten makes it one of the major sources for X-ray targets and for the protection against high-energy radiations.

Due to a reduced size and a big length/diameter ratio and a surface/volume ratio, quasi one-dimensional metal structures of transition metals - nanowires, nanobelts, microwires have different physical and chemical properties, what makes them technologically applicable in various devices and applications (e. g. nanoelectronics, composites).

A technological problem is a method for a synthesis that would allow a preparation of big quantities of quasi one-dimensional metal structures of transition metals - nanowires, nanobelts, microwires.

### Prior Art

Joule heating of bundles of Mo₆S₃I₆ nanowires in a transmission electron microscope in a vacuum causes a thermal decomposition and conversion into molybdenum nanowires which have conductivity higher by two to three orders than the conductivity of the starting material - described in Hummelg 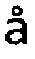 rd M., Zhang R., Carlberg T., Vengust D., Dvor 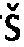 ek D., Mihailovic D., Olin H.:*Nanotechnology,* 2010, *Vol.* 21, No. 16, 165704. Metallic molybdenum wires with diameters ranging from 15 nanometres to one micron and a length up to 500 micrometres were prepared in a two-step synthesis. Molybdenum oxide wires were first selectively electro deposited onto edges in graphite and then reduced with hydrogen at 500 °C into metallic molybdenum. Diameters of wires are directly proportional with a square root of a time course of electrolysis. Metallic nanowires can be removed from a graphite electrode through incorporation into polystyrene. Conductivity and mechanical resilience of incorporated nanowires is similar as with molybdenum - described in Zach M. P., Ng K. H., Penner R.M.: Science, 2000: Vol. 29, No. 5499, 2120 - 2123; Zach M. P., Inazu K. H., Ng K. H., Hemminger J. C., Penner R.M.: Chemistry of Materials, 2002, Vol. 14, No. 7, 3206-3216; Penner R. M., Zach M. P., Favier F.: American patent database, US-P-6843902. Metallic nanowires can also be synthetized from organometallic compounds. At reduced pressure (10⁻⁴ torr) and increased temperature (500-600 °C) a thin film of an organometallic compound and an organic reducing agent is applied onto a substrate - disclosed in patent US 2007/0059928 A1. By using the method of oriented hardening of eutectic alloys, they managed to prepare a microstructure with individual phases oriented in parallel belts or columns or equally oriented fibres of one phase within a matrix of another phase. A certain phase can be selectively dissolved by etching or electrochemical oxidation and microcrystal metallic fibres, nanowires, circuits made of crystal metallic nanowires, nanopores and various combined structures with a combined application of various steps in the process can be prepared. This is made possible by a good understanding of thermodynamics and kinetics of phase changes and chemical reactions, including electrical dissolution, selective etching, electrodeposition, complexation of reaction products and passivation in the system NiAl-X (X = Re, W, Mo), Ag-Cu and Fe-Au. The nanostructures thus obtained (e. g. W, Mo) are monocrystalline, they have the same crystallographic orientation and a very huge length/diameter ratio (>1000). Wire length can be controlled by etching time, whereas wire diameter can be controlled by controlling reaction conditions, such as temperature gradient and growth level during hardening of an alloy - described in Hassel A. W., Bello-Rodriguez B., Smith A. J., Chen Y., Milenkovic S.: Physica Status Solidi B, 2010, Vol. 247, No. 10, 2380 - 2392. Metallic tungsten nanowires can be synthesised by way of a catalyst, an alloy (Fe-Ni) at a temperature of 850°C. A diameter of nanotubes that have a well-defined monocrystal structure amounts at the bottom of nanotubes from 100 to 400 nm and at the top less than 80 nm - described in Wang S., He Y., Xu J., Jiang Y., Huang B., Zou J., Wang Y., Liu C. T., Liaw P. K.: Journal of Materials Research, 2008, Vol. 23, No. 1, 72 - 77. Tungsten nanowires can be synthesised by means of a CVD technique - described in Vaddiraju S., Chandrasekaran H., Sunkara M. K.: Journal of American Chemical Society, 2003, Vol. 125, No. 36, 10792-10793).

A chain of individual molybdenum atoms can be obtained by encapsulating carbon nanotubes with a double layer inside with diameters ranging from 0.6 to 0.8 nm. Chains of individual Mo atoms are formed within nanotubes without a use of reducing agents - described in Muramatsu H., Hayashi T., Kim Y. A., Shimamoto D., Endo M., Terrones M., Dresselhaus M. S.: Nano Letters, 2008, Vol. 8, No. 1, 237-240.

Huge surfaces of arranged Mo nanotubes were synthesised on stainless steel with a high-temperature chemical vapour deposition (CVD) technique by using molybdenum. Research has shown that decomposition of gaseous MoO₂ occurs on a hot substrate - described in Zhou J., Deng S., Gong L., Ding Y., Chen J., Huang J., Chen J., Xu N., Wang Z. L.: Journal of Physical Chemistry B, 2006, Vol. 110, No. 21, 10296 - 10302. Niobium metallic nanowires can be synthesised in a transmission electron microscope (TEM) by way of carbon nanotubes as a substrate - described in Rogachev A., Bezryadin A.: Applied Physics Letters, 2003, Vol. 83, No. 3, 512-514. A transmission electron microscope (TEM) can also be used to synthesise tungsten nanowires - described in Thong J. T. L., Oon C. H., Yeadon M., Zhang W.D.: Applied Physics Letters, 2002, Vol. 81, No. 25, 4823 - 4825. Tantalum nanowires having a diameter between 25 and 10 nm and a length between 35 and 70 nm were prepared by using the method of electrochemical reaction of vapour deposited aluminium on a layer of tantalum applied on a quartz glass. Oxalic acid was used to prepare a nanoporous aluminium layer; then followed oxidation of the lower tantalum layer through the pores thus prepared - described in Mozalev A., Gorokh G., Sakairi M., Takahashi H.: Journal of Materials Science, 2005, Vol.40, No. 24, 6399-6407.

Several different techniques and ways of synthesising quasi one-dimensional structures (nanowires, microwires and belts) of 4d and 5d transition metals (Nb, Mo Ta, W) are known, yet no method has ever been described for a synthesis of macroscopic quantities of quasi one-dimensional structures of transition metals with a chemical conversion of quasi one-dimensional materials consisting of nanowires with a diameter below one micrometre, described with formula M₆C_{y}H_{z}, 8,2<y+z≤10, wherein M is a transition metal (Nb, Mo Ta, W), C is chalcogen (S, Se, Te); H is halogen (I) by heating in the presence of hydrogen.

WO 2008/121081 discloses a process for the synthesis of nano-tubes of transition metal dichalcogenides, fullerene-like nano-structures of transition metal dichalcogenides, and nano-tubes for transition metal dichalcogenides, filled with fullerene-like nano-structures of transition metal dichalcogenides, characterized in that the synthesis occurs by the chemical transformation of quasi non-dimensional materials, consisting of nano-wires with a diameter of under 1 µm, described by the formula M₆C_{y}H_{z}, with 8.2 < y + z ≤ 10, wherein M is a transition metal C is a chalcogen, and H is a halogen (I).

The task and goal of the invention is a synthesis that will allow a synthesis of huge quantities of quasi one-dimensional structures of 4d and 5d transition metals selected from Nb, Mo Ta and W. The task of the invention is solved by a method for the synthesis of macroscopic quantities of quasi one-dimensional structures claimed in independent claim 1.

Preferred embodiments are set forth in the subclaims and the following detailed description.

### Description of the Invention

The invention will be described by an embodiment, figures and a table.
The figures show:
Figure 1: Schematic presentation of an experiment, with which quasi one-dimensional materials consisting of nanowires with a diameter below one micrometre and described by formula M₆S₂I₈ were converted into quasi one-dimensional molybdenum nanobelts, nanowires and microwires by heating in the presence of a mixture of gases consisting of 70 vol. % of argon and 30 vol. % of hydrogen in a single-zone furnace. Figure 1 has the following reference numbers: a gas inlet on a quartz tube is 1, a boat with a material is 2, a gas outlet is 3, a furnace is 4 and a quartz tube is 5.
Figure 2a: Image of formed molybdenum quasi one-dimensional structures (molybdenum belts, nanowires and microwires) recorded by a transmission electron microscope to field emission JEOL JSM-7600F applied onto a carbon belt.
Figure 2b: Image of dispersed molybdenum quasi one-dimensional structures applied onto a silicon plate and recorded by a transmission electron microscope to field emission JEOL JSM-7600F.
Figure 3: Image of XRD spectrum recorded by X-ray powder diffractometre Bruker ASX D4 Endeavor. The obtained spectrum matches deflection data for molybdenum from the ICSD database.
   The table shows:
   Table 1. X-ray powder diffraction of a deflection line of a sample and a deflection line of a standard taken from the ICSD database (card ICSD # 076415), λ=1.51478 Å

The described technical problem is solved by the invention by a chemical conversion of quasi one-dimensional materials consisting of nanowires with a diameter below one micrometre described by formula M₆C_{y}H_{z}, 8,2<y+z≤10, wherein M is a transition metal selected from Nb, Mo, Ta and W, C is chalcogen selected from S, Se, and Te; H is halogen I. A chemical conversion of quasi one-dimensional materials consisting of nanowires having a diameter below one micrometre described with formula M₆C_{y}H_{z}, 8,2<y+z≤10, wherein M is a transition metal selected from Nb, Mo, Ta and W, C is chalcogen selected from S, Se and Te; H is halogen I is carried out in a quartz tube with aeration with a mixture of gases consisting of argon as carrier gas and hydrogen as a reducing agent; hydrogen content in the gas mixture is at least 0.1 %. The conversion is also carried out in gaseous hydrogen without an admixture of a carrier inert gas. The conversion is carried out at temperatures above 400 °C, preferably at temperatures between 700 °C and 1500 °C. Carrier gases - in the case of a mixture with hydrogen - can be other inert gases instead of argon, which do not react with M₆C_{y}H_{z}, 8,2<y+z≤10 in reaction conditions, wherein M is a transition metal selected from Nb, Mo, Ta and W, C is chalcogen selected from S, Se and Te; H is halogen I. The conversion can also be carried out in other reaction vessels that are thermally stable enough and unreactive when heated in the presence of hydrogen at temperatures above 400 °C. The conversion can also be carried out in closed reaction vessels in the presence of hydrogen without any gas flow at temperatures above 400 °C.

A starting material in the form of quasi one-dimensional materials consisting of nanowires having a diameter below one micrometre and described by formula M₆C_{y}H_{z}, 8,2<y+z≤10 is converted into quasi one-dimensional structures of transition metals selected from Nb, Mo, Ta and W.

### Embodiment

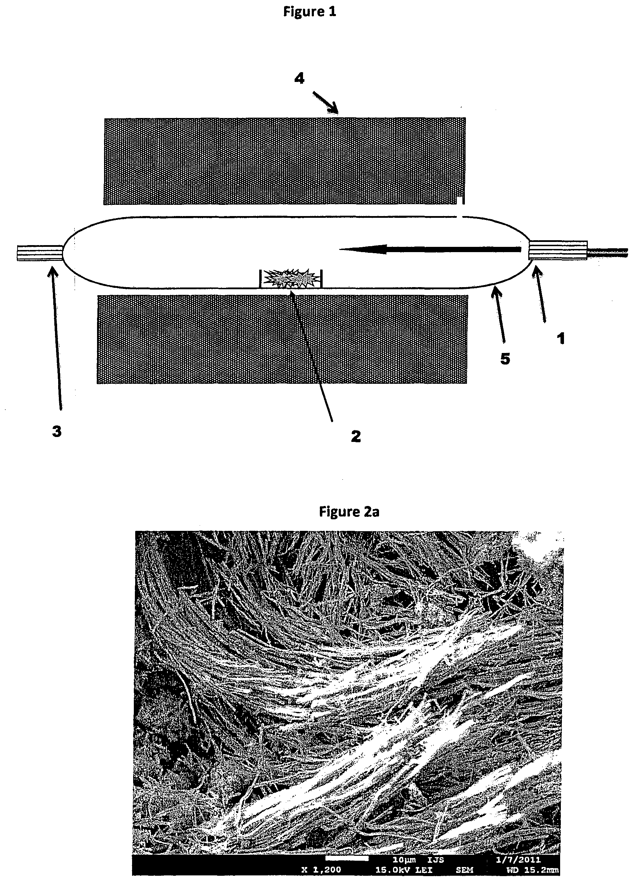

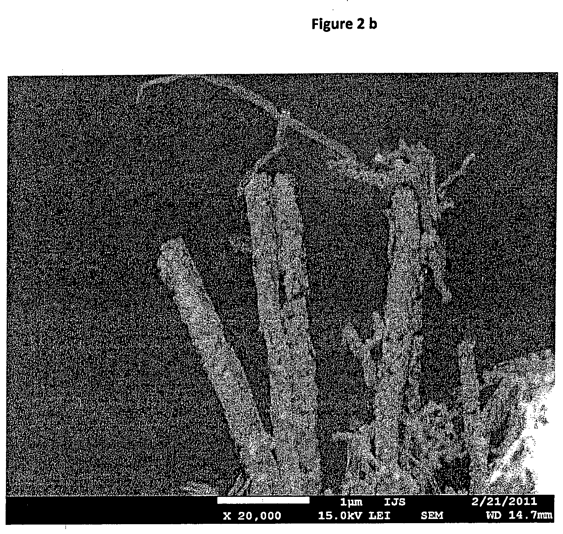

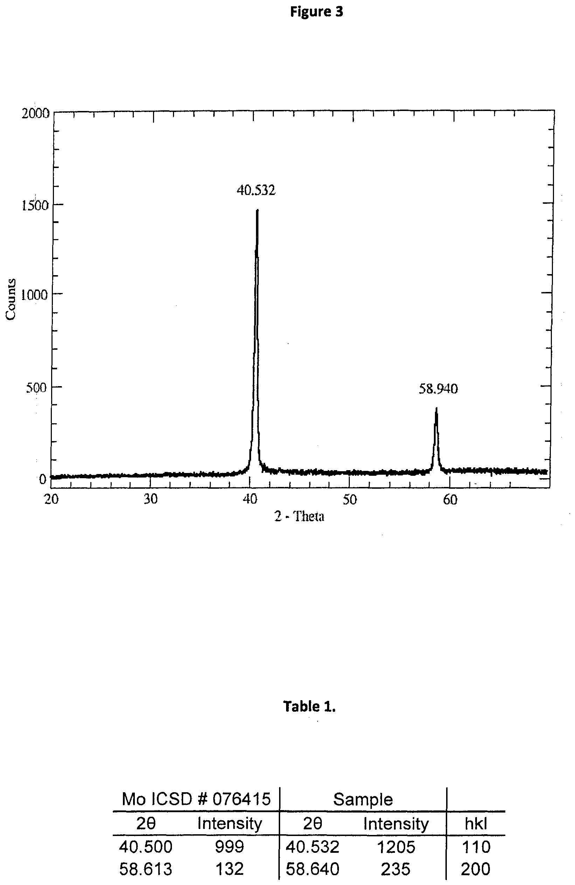

The embodiment describes a synthesis of a quasi one-dimensional structure of transition metals with a chemical conversion of quasi one-dimensional materials consisting of nanowires having a diameter below one micrometre and described with formula M₆C_{y}H_{z}, 8,2<y+z≤10, wherein M is a transition metal selected from Nb, Mo, Ta and W, C is chalcogen selected from S, Se and Te; H is halogen I.
To a quartz boat, 103 mg of Mo₆S₂I₈ nanowires synthesised directly from elements as disclosed in EP 1 541 528 were weighed. The boat with the material consisting of bundles of Mo₆S₂I₈ nanowires (2 on Figure 1) was put into a quartz tube (5 on Figure 1) having a length of 1000 mm and a diameter of 32 mm that was arranged in a single-zone furnace (4 on Figure 1). The quartz tube was provided at both ends with ground joints that enable closing of the tube once the boat with the material is inserted, a supply into the quartz tube (1 on Figure 1) and a discharge of gases and gaseous products (3 on Figure 1). The closed quartz tube with the inserted quartz boat with the material was first aerated with argon for 30 minutes with a flow rate of 15 ml/min and then aeration continued for 30 more minutes with a mixture of gases 1 consisting of 70 % of argon and 30 % of hydrogen. The flow rate of the mixture of gases 1 was 33 ml/min. Then the furnace was turned on and was heated with a rate of 5 °C per minute. During the heating, which took two and a half hours, the flow rate of the mixture of gases 1 was 33 ml/min. The final temperature in the furnace, in which the boat with the sample was arranged, amounted to 730 °C, what was measured with a thermomember. After the mixture of gases 1 was aerated for four hours at this temperature, the furnace was turned off and left for three hours to cool. Aeration with a mixture of gases 1 continued in the course of the entire method. As the quartz tube cooled to a temprerature below 50 °C, the mixture of gases 1 was closed and aerated for fifteen minutes with argon. When the aeration with argon was over, the boat with the obtained material was taken from the quartz tube. The mass of the obtained material consisting of quasi one-dimensional structures of transition metals (nanowires, microwires and belts) amounted to 37 mg. The obtained material was examined by scanning electrone microscopy SEM (Figure 2a and Figure 2b) and X-ray spectroscopy (Figure 3, Table 1.+).

According to the invention, the synthesis is carried out by a chemical conversion of quasi one-dimensional materials consisting of nanowires having a diameter below one micrometre and described with formula M₆C_{y}H_{z}, 8,2<y+z≤10, wherein M is a transition metal selected from Nb, Mo, Ta and W, C is chalcogen selected from S, Se and Te, H is halogen I, wherein the mentioned quasi one-dimensional material is heated in the presence of hydrogen and the conversion is carried out at a temperature above 400 °C. Said quasi one-dimensional material is heated in the presence of hydrogen at temperatures above 400 °C, preferably at temperatures between 700 °C and below 1500 °C. The chemical conversion of quasi one-dimensional materials consisting of nanowires having a diameter below one micrometre and described with formula M₆C_{y}H_{z}, 8,2<y+z≤10, wherein M is a transition metal selected from Mo, W, Ta and Nb, C is chalcogen selected from S, Se and Te, H is halogen I with hydrogen is carried out in a carrier inert gas, preferably argon. Reduction is preferably carried out at volume contents of hydrogen above 0.1 vol. %.

## Claims

1. Method for a synthesis of quasi one-dimensional structures of 4d transition metals selected from Nb and Mo, and 5d transition metals selected from Ta and W, **characterised in that**
the synthesis is carried out by a chemical conversion of quasi one-dimensional materials consisting of nanowires with a diameter below one micrometer, described with formula M₆C_{y}H_{z}, 8,2<y+z≤10, wherein M is a transition metal selected from Nb, Mo, Ta and W, C is chalcogen selected from S, Se and Te, H is I, wherein said quasi one-dimensional material is heated in the presence of a gas consisting of hydrogen and an optional carrier inert gas and the conversion is carried out at a temperature above 400°C.

2. Method according to claim 1 **characterised in that**
said quasi one-dimensional material is heated in the presence of hydrogen at temperatures between 700°C and below 1500°C.

3. Method according to claim 1 **characterised in that**
the chemical conversion of quasi one-dimensional materials consisting of nanowires having a diameter below one micrometer and described with formula M₆C_{y}H_{z}, 8,2<y+z≤10, wherein M is a transition metal selected from Mo, W, Ta and Nb, C is chalcogen selected from S, Se and Te, H is I with hydrogen is carried out in a carrier inert gas.

4. Method according to claim 3 **characterised in that**
reduction is carried out at volume contents of hydrogen above 0.1 vol%.

5. Method according to claim 3, wherein the carrier inert gas is argon.

## Patentansprüche

1. Verfahren zur Synthese von quasi eindimensionalen Strukturen von 4d-Übergangsmetallen, ausgewählt aus Nb und Mo, und 5d-Übergangsmetallen, ausgewählt aus Ta und W, **dadurch gekennzeichnet, dass**
die Synthese durch eine chemische Umwandlung von quasi eindimensionalen Materialien erfolgt, die aus Nanodrähten mit einem Durchmesser unter einem Mikrometer bestehen, beschrieben mit der Formel M₆C_{y}H_{z}, 8,2<y+z≤10, wobei M ein Übergangsmetall, ausgewählt aus Nb, Mo, Ta und W ist, C ein Chalkogen, ausgewählt aus S, Se und Te, ist, H I ist, wobei das quasi eindimensionale Material in Gegenwart eines Gases erwärmt wird, das aus Wasserstoff und einem optionalen Träger-Inertgas besteht, und die Umwandlung bei einer Temperatur über 400° C erfolgt.

2. Verfahren gemäß Anspruch 1, **dadurch gekennzeichnet, dass**
das quasi eindimensionale Material in Gegenwart von Wasserstoff auf Temperaturen zwischen 700° C und unter 1500° C erwärmt wird.

3. Verfahren gemäß Anspruch 1, **dadurch gekennzeichnet, dass**
die chemische Umwandlung von quasi eindimensionalen Materialien, die aus Nanodrähten mit einem Durchmesser unter einem Mikrometer bestehen und beschrieben sind mit der Formel M₆C_{y}H_{z}, 8,2<y+z≤10, wobei M ein Übergangsmetall, ausgewählt aus Mo, W, Ta und Nb, ist, C ein Chalkogen, ausgewählt aus S, Se und Te, ist, H I ist, mit Wasserstoff in einem Träger-Inertgas erfolgt.

4. Verfahren gemäß Anspruch 3, **dadurch gekennzeichnet, dass** eine Reduktion bei Volumengehalten von Wasserstoff über 0,1 Vol.-% erfolgt.

5. Verfahren gemäß Anspruch 3, wobei das Träger-Inertgas Argon ist.

## Revendications

1. Procédé permettant la synthèse de structures quasi unidimensionnelles de métaux de transition 4d sélectionnés à partir de Nb et Mo, ainsi que de métaux de transition 5d sélectionnés à partir de Ta et W, **caractérisé en ce que** :
la synthèse est exécutée grâce à une conversion chimique de matériaux quasi unidimensionnels constitués de nano fils présentant un diamètre en dessous de un micromètre, décrits par la formule M₆C_{y}H_{z}, 8,2 < y + z ≤ 10, dans laquelle M représente un métal de transition sélectionné à partir de Nb, Mo, Ta et W, C est un chalcogène sélectionné à partir de S, Se, et Te, H représente I, ledit matériau quasi unidimensionnel étant chauffé en présence d'un gaz constitué d'hydrogène et d'un gaz inerte porteur optionnel et la conversion étant exécutée à une température supérieure à 400 °C

2. Procédé selon la revendication 1, **caractérisé en ce que**
ledit matériau quasi unidirectionnel est chauffé en présence d'hydrogène à des températures comprises entre 700 °C et 1500 °C.

3. Procédé selon la revendication 1, **caractérisé en ce que**
la conversion chimique de matériaux quasi unidimensionnels constitués de nano fils présentant un diamètre en dessous de un micromètre et décrits par la formule M₆C_{y}H_{z}, 8,2 < y + z ≤ 10, dans laquelle M représente un métal de transition sélectionné à partir de Mo, W, Ta et Nb, C est un chalcogène sélectionné à partir de S, Se, et Te, H représente I avec de l'hydrogène, est exécutée dans un gaz inerte porteur.

4. Procédé selon la revendication 3, **caractérisé en ce que**
la réduction est exécutée avec des teneurs en volume d'hydrogène au-dessus de 0,1 % en volume.

5. Procédé selon la revendication 3, dans lequel le gaz inerte porteur est de l'argon.
